Europäisches Patentamt

European Patent Office

Office européen des brevets

(19)

(11) Publication number: **0 289 537 B1**

## EUROPEAN PATENT SPECIFICATION

(12)

(45) Date of publication of patent specification: **16.12.92**

(51) Int. Cl.5: **C01G 25/06**, C22B 3/00, C22B 34/14

(21) Application number: **87906978.9**

(22) Date of filing: **13.10.87**

(86) International application number: **PCT/AU87/00344**

(87) International publication number: **WO 88/03128 (05.05.88 88/10)**

(54) **PROCESS FOR THE PRODUCTION OF ZIRCONIUM SULPHATE.**

(30) Priority: **28.10.86 AU 8726/86**

(43) Date of publication of application: **09.11.88 Bulletin 88/45**

(45) Publication of the grant of the patent: **16.12.92 Bulletin 92/51**

(84) Designated Contracting States: **AT BE CH DE FR GB IT LI LU NL SE**

(56) References cited:
WO-A-86/04614     AU-A- 1 918 724
AU-B- 3 693 558     FR-A- 2 469 462
FR-A- 2 568 240     US-A- 1 648 569
US-A- 3 672 825

(73) Proprietor: **COMMONWEALTH SCIENTIFIC AND INDUSTRIAL RESEARCH ORGANISATION**
**Limestone Avenue**
**Campbell, Australian Capital Territory 2601(AU)**

(72) Inventor: **HOUCHIN, Martin, Richard**
**61 Cumberland Road**
**Pascoe Vale, VIC 3044(AU)**
Inventor: **SINHA, Hari, Narayan**
**23 Scheele Street**
**Surrey Hills, VIC 3127(AU)**

(74) Representative: **Andrae, Steffen, Dr. et al**
**Balanstrasse 55**
**W-8000 München 90(DE)**

EP 0 289 537 B1

Rank Xerox (UK) Business Services

## Description

This invention relates to a process for obtaining zirconium sulfate from zirconiferous materials and is particularly concerned with the production of zirconium sulfate tetrahydrate from caustic-leached-dissociated zircon (CDZ).

Production of zirconium in a stable, water soluble form is in demand for coatings, e.g. in the paint industry for protection of $TiO_2$, and as a starting material for production of zirconium chemicals. Zirconium sulfate tetrahydrate ($Zr(SO_4)_2.4H_2O$) is stable, very water soluble, crystallizes as a pure stoichiometric compound and is easily converted to other zirconium compounds.

In WO 86/04614 (EP-A1-210 236) there is described a process for the production of zirconium sulfate, which is based on the finding that the efficiency of sulfuric acid leaching of dissociated zircon can be greatly enhanced if proper attention is paid to the removal from the system of water which is produced during leaching.

Said patent application also shows how the initial leach product can be quantitatively converted to the stable zirconium sulfate tetrahydrate by addition of a measured amount of water. The heat produced by the addition of water to the acid leach slurry aids the dissolution of the zirconium salt thereby allowing the removal of insoluble impurities. On cooling, the zirconium quantitatively recrystallizes as the hydrated sulfate $Zr(SO_4)_2.4H_2O$.

Further, WO 87/07915 (not prepublished, corr. to EP-A1-270 637) describes a process based on the finding that low-silica-containing zirconiferous materials, particularly caustic-leached-dissociated zircon (CDZ) can be effectively leached at temperatures in the range 175ºC to 250ºC using sulfuric acid (preferably at a concentration such that the acid boils at the leaching temperature).

As a result of the production of zirconium sulfate tetrahydrate, waste sulfuric acid is produced. We have now found a process for the production of zirconium sulfate tetrahydrate from zirconiferous materials which allows elimination or at least minimization of acid waste. By correct management of reactants and products it is possible, with this process, to establish a balance such that the residual acid is recycled and hence a minimum of acid waste is produced.

According to the present invention, there is provided a process for the production of zirconium sulfate tetrahydrate which comprises the steps of:

(i) leaching a low-silica-containing zirconiferous material with sulfuric acid having a concentration in the range of 65% to 95% w/w to produce an acid leach slurry;

(ii) diluting the resulting acid leach slurry such that the concentration of sulfuric acid is in the range of 45% to 75% w/w sulfuric acid to produce zirconium sulfate tetrahydrate crystals in a diluted sulfuric acid slurry;

(iii) separating said zirconium sulfate tetrahydrate crystals from the diluted acid;

(iv) reconstituting the diluted acid by the addition of sulfuric acid at a concentration greater than the concentration of sulfuric acid used for the leach at step (i) to give sulfuric acid of a concentration suitable for use in step (i); and

(v) recycling the reconstituted sulfuric acid to leach step (i).

It will be understood by those skilled in the art that the temperature at which the zirconium source may be leached is dependent on the concentration of the sulfuric acid. The greater the concentration of the sulfuric acid the higher the boiling point and hence the higher the temperature at which the zirconium source may be leached. The maximum temperature at which the leach can be conducted influences the nature of materials that can be leached.

The concentration of sulfuric for use in the leach at step (i) of the present invention is in the range of 65% to 95% w/w sulfuric acid. It is preferred that the concentration of said sulfuric acid is in the range 75% to 90% w/w sulfuric acid. More preferably the concentration of said sulfuric acid is in the range of 80% to 90% w/w sulfuric acid. Most preferable for use in the leach at step (i) of the present invention is 85% w/w sulfuric acid.

In the process of the present invention as zirconium sources low-silica-containing zirconiferous materials are used. The advantage in leaching low-silica-containing zirconiferous materials is that the leach may be carried out at relatively low temperatures, typically in the range of 175ºC to 250ºC. A particularly advantageous low-silica-containing zirconiferous material is caustic-leached-dissociated zircon.

Thus in the present invention the zirconium source is low-silica-containing zirconiferous material. More preferably the zirconium source is caustic-leached-dissociated zircon as it allows the acid leach of step (i) to be carried out at a relatively low temperature. This provides some flexibility in the choice of materials of construction that can be used in apparatus of use in the process of the present invention.

It is also preferable in the process of the present invention that the sulfuric acid for use in the leach of step (i) has a composition wherein the boiling point of the sulfuric acid corresponds to the temperature of said leach.

The reconstitution of the diluted acid at step (iv) may conveniently be achieved by the addition of sufficient sulfuric acid at a concentration greater than that of the sulfuric acid for use in the leach at step (i) to reconstitute the diluted acid to the concentration of the sulfuric acid for use in the leach at step (i).

In one embodiment of the present invention the concentration of the sulfuric acid for use in the leach at step (i), the concentration of sulfuric acid to which the acid leach slurry is diluted at step (ii) and the concentration of the sulfuric acid used to reconstitute the diluted acid at step (iv) may be chosen, having regard to the sulfuric acid balance of the process, to provide a process in which the volume of reconstituted acid that is recycled at step (v) is equivalent to that used in the leach at step (i) thereby providing a process in which waste sulfuric acid is reduced to a minimum.

The yield and purity of the zirconium sulfate tetrahydrate crystals and the practical application of the process are determined by a number of inter-related process variables.

1. The concentration at which the zirconium sulfate tetrahydrate crystals are produced at step (ii).

It will be understood that the zirconium sulfate tetrahydrate is the stable solid phase in equilibrium with sulfuric acid over the approximate concentration range of 30% to 80% w/w sulfuric acid at room temperature.

The solubility of zirconium sulfate tetrahydrate is less than 10 g $dm^{-3}$ (expressed as $ZrO_2$) at 25°C over the range 45% to 75% w/w $H_2SO_4$. Thus during the production of zirconium sulfate tetrahydrate at step (ii) a high yield is obtained if the resulting acid leach slurry from step (i) is diluted to a concentration in said range.

Therefore according to the present invention the zirconium sulfate tetrahydrate is crystallized at step (ii) by diluting the acid leach slurry to a concentration in the range of from 45% to 75% w/w sulfuric acid.

At about 65% w/w sulfuric acid the solubility of the zirconium sulfate tetrahydrate is at a minimum. Hence a maximum yield of zirconium sulfate tetrahydrate crystals may be obtained by diluting the acid leach slurry of step (i) to a concentration of about 65% w/w sulfuric acid.

However the purity of the zirconium sulfate tetrahydrate crystals produced at step (ii) may be increased by diluting the acid leach slurry from step (i) to a concentration wherein the solubility of an undesirable impurity is increased, thus reducing the amount of said impurity in the zirconium sulfate tetrahydrate crystals produced at step (ii).

It will be appreciated that the concentration to which the acid leach slurry of step (i) is diluted in step (ii) may be selected so as to minimise the amount of undesirable impurities and to maximise the yield of zirconium sulfate tetrahydrate.

2. The volume of acid used in the acid leach of step (i)

The fluidity of the acid leach slurry depends on the amount of acid used to leach the zirconium source. The more acid used in the leach the more fluid, or free flowing is the consistency of the acid leach slurry.

Minimizing the amount of acid used in the leach minimizes the amount of dilute acid to be reconstituted and recycled. By minimizing the amount of acid to be recycled, the concentration of the reconstituted acid used for subsequent leaches, and hence the leach temperature, can be maximized. However if the leach product is to be transported to another vessel for subsequent processing, it may be desirable to use additional acid to provide a slurry with a "free-flowing" consistency.

3. The acid content of the zirconium sulfate tetrahydrate crystals separated from the diluted acid at step (iii)

The free-moisture, or free-acid, content of zirconium sulfate tetrahydrate crystals separated at step (iii) also affects the acid recycle balance. Where said crystals are separated in the form of a cake or aggregate free-acid may be held up in the cake or aggregate. Any acid held up in said cake or aggregate is not recycled. Thus the volume of acid to be reconstituted and recycled is decreased. The moisture content of said cake or aggregate is determined by the size, shape and crystal nature of the zirconium sulfate tetrahydrate, the separation technique and apparatus employed.

The zirconium sulfate tetrahydrate crystals may be separated by any convenient method such as, for example, filtration, decanting of the diluted acid or centrifugation.

4. Purification methods

The purity of the zirconium sulfate tetrahydrate crystals may be improved by a number of methods both during the process for the production of the zirconium sulfate tetrahydrate and during the reconstitution and recycle of the sulfuric acid.

If the process of the present invention is to be performed under total acid recycle conditions where no waste acid is produced, then once the process has reached "steady state" in all steps, the purity of the zirconium sulfate tetrahydrate crystals will primarily be determined by the purity of the zirconium source.

If a higher purity product is required further steps may be added to the process to reduce impurities.

Acid insoluble impurities may be reduced in a "hot filtration" step after the dilution and before the cooling and the production of the zirconium sulfate tetrahydrate crystals at step (ii). To perform the "hot filtration" step, sufficient acid must be present to dissolve the initial zirconium sulfate product and retain it in solution long enough to perform the hot filtration.

The dilution of the acid leach slurry at step (ii) generates heat. This in combination with the increased volume may be sufficient to dissolve all, or at least a substantial proportion, of the zirconium sulfate tetrahydrate produced by said dilution. Before the slurry so-produced is allowed to cool acid-insoluble impurities may be removed or reduced by filtration. It will be understood that heat may be supplied by other convenient means to promote the dissolution of the zirconium sulfate tetrahydrate. The dissolution of the zirconium sulfate tetrahydrate may also be promoted by the addition of further acid of the same concentration as the diluted acid leach slurry. Said addition of further acid may be from a storage reservoir to which said acid is returned after filtration. It will be understood that by returning the volume of acid, that was added to promote the dissolution of zirconium sulfate tetrahydrate, to the storage reservoir the acid recycle balance may be maintained.

Acid soluble impurities may be removed, or reduced, by washing the zirconium sulfate tetrahydrate crystals to remove, or reduce, retained sulfuric acid. The zirconium sulfate tetrahydrate crystals may be washed, for example, with acetone. Acid soluble impurities may also be reduced by "bleeding" the acid recycle stream or by reducing impurities from this stream. Methods for reducing acid soluble impurities from the acid recycle stream may include, for example, precipitation, ion exchange, solvent extraction or any other suitable process.

The process of the present invention is further illustrated and described by the following non-limiting examples:

Example 1

150 g of caustic-leached-dissociated-zircon (CDZ, 95% $ZrO_2$) was reacted with 491 g of 85% w/w $H_2SO_4$ (426 g of 98% $H_2SO_4$ plus 65 g of $H_2O$) at its boiling point of 225°C for 2.5 hours. The reaction vessel was fitted with a stirrer, a temperature controller and an air condensor which allowed water produced by the reaction to distill off thereby maintaining constant sulphuric acid concentration and constant temperature. After allowing the reaction moisture to cool to 70°C, 143 g of water was added with stirring, resulting in a temperature rise and dissolution of the initial zirconium sulphate product. Oh cooling, $Zr(SO_4)_2.4H_2O$ crystals deposited. The slurry was filtered, giving 193 g of filtrate (65% w/w $H_2SO_4$) and 480 g of moist product (380 g $Zr(SO_4)_2.4H_2O$, 10 g solid "impurities" and 90 g of 65% $H_2SO_4$ held in filter cake). This product contained 10 g of water insoluble residue ($ZrSiO_4$, $SiO_2$ and unreacted $ZrO_2$).

The 193 g of 65% w/w $H_2SO_4$ filtrate was reconstituted with 298 g of 98% $H_2SO_4$ and recycled for a subsequent leach.

Although initially the product described from the above process was purer that the CDZ feed material, on continued recycling a "steady-stated" system is produced where product purity (based on $ZrO_2$ content) was equal to the feed purity.

Leach efficiency was 98% based on the CDZ feed containing 95% $ZrO_2$. Zirconium recovery from the slurry produced by the acid leach was 98%.

Example 2

150 g of CDZ (95% $ZrO_2$) was reacted with 387g of 85% $H_2SO_4$ as described in Example 1. After allowing the reaction mixture to cool to 70°C, 100 g of $H_2O$ was added with stirring. Crystals of $Zr(SO_4)_2.4H_2O$ formed almost immediately. This thick slurry was filtered giving 45 g of filtrate (65% w/w $H_2SO_4$) and 480 g of moist product as in Example 1. One portion of the filter cake was washed with acetone, then calcined to $ZrO_2$ for analysis. Another portion was calcined without washing. The products had the following

4

analyses.

| Analysis (ppm) | Y | U | Th | Hf | Fe | Ti | Ca | Si | Al |
|---|---|---|---|---|---|---|---|---|---|
| Feed | 1170 | 250 | 140 | 1.63% | 200 | 850 | 200 | 1.1% | 650 |
| Washed Product | 1160 | 130 | 130 | 1.63% | 30 | 200 | 28 | 1.1% | 410 |
| Unwashed Product | 1150 | 180 | 140 | 1.59% | 120 | 630 | 83 | 1.1% | 650 |

Example 3

150 g of CDZ (95% $ZrO_2$) was reacted with 491 g of 85% w/w $H_2SO_4$ as described in Example 1. After reaction for 2.5 hours, 350 g of 65% $H_2SO_4$ was added to the reactor from a storage vessel, followed by 143 g of $H_2O$. The resulting hot slurry was quickly filtered. On cooling the filtrate deposited $Zr(SO_4)_2.4H_2O$ crystals. The slurry was filtered, giving 543 g of filtrate (65% $H_2SO_4$) and 470 g of a moist product comprising (380 g of $Zr(SO_4)_2$ $4H_2O$ and 90 g of 65% $H_2SO_4$). This product was totally water soluble.

350 g of the 65% $H_2SO_4$ filtrate was returned to storage vessel and 193 g reconstituted with 298 g of 98% $H_2SO_4$ and recycled for a subsequent leach.

The hot filtration step removes $ZrSiO_4$, $SiO_2$ and unreacted $ZrO_2$ but very little else. Therefore, as in Example 1 the other impurities will eventually reach a steady-state in the system and then report in the product in the same concentration as they are present in the feed. The product purity can be improved by washing the product filter cake, as in Example 2, by bleeding a portion of the recycled acid (e.g. in the storage vessel) by any suitable technique such as precipitation, ion exchange, solvent extraction etc., of the impurities. Elimination of impurities in the acid recycle line results in product purities similar to those given in Example 2, but with the Si content reduced to near zero (typically 20 ppm) depending on the effectiveness of the hot filtration.

Example 4

150 g of CDZ was reacted with 759 g of 85% $H_2SO_4$ as described in Example 1. After allowing the reaction mixture to cool to 90°C, 220 g of $H_2O$ was added with stirring. The resulting hot slurry was quickly filtered. On cooling, the filtrate deposited $Zr(SO_4)_2.4H_2O$ crystals which were filtered, washed with acetone and dried at the pump. Yield = 380 g. The product was totally water soluble. A portion of the product was calcined to $ZrO_2$ and gave the analysis below.

| Analysis (ppm) | Y | U | Th | Hf | Fe | Ti | Ca | Si | Al |
|---|---|---|---|---|---|---|---|---|---|
| CDZ Feed | 1170 | 250 | 140 | 1.63% | 200 | 850 | 200 | 1.1% | 650 |
| Product | 1140 | 130 | 140 | 1.60% | 30 | 210 | 25 | 20 | 350 |

## Claims

1. A process for the preparation of zirconium sulfate tetrahydrate comprising the steps of:
   (i) leaching a low-silica-containing zirconiferous material with sulfuric acid having a concentration in the range of 65% to 95% w/w to produce an acid leach slurry;
   (ii) diluting the resulting acid leach slurry such that the concentration of sulfuric acid is in the range of 45% to 75% w/w sulfuric acid to produce zirconium sulfate tetrahydrate crystals in a diluted sulfuric acid slurry;
   (iii) separating said zirconium sulfate tetrahydrate crystals from the diluted acid;
   (iv) reconstituting the diluted acid by the addition of sulfuric acid at a concentration greater than the concentration of sulfuric acid used for the leach at step (i) to give sulfuric acid of a concentration suitable for use in step (i); and
   (v) recycling the reconstituted sulfuric acid to leach step (i).

2. A process according to claim 1 wherein the concentration of sulfuric acid for use in the leach at step (i) is in the range of 75% to 90% w/w $H_2SO_4$.

3.  A process according to either of claim 1 or 2 wherein the concentration of sulfuric acid for use in the leach at step (i) is in the range of 80% to 90% w/w $H_2SO_4$.

4.  A process according to any one of claims 1 to 3 wherein the concentration of sulfuric acid for use in the leach at step (i) is 85% w/w $H_2SO_4$.

5.  A process according to any one of claims 1 to 4 wherein said low-silica containing zirconi Ferous material is caustic-leached-dissociated zircon.

6.  A process according to any one of claims 1 to 5 wherein said leach is carried out at a temperature in the range of 175°C to 250°C.

7.  A process according to any one of claims 1 to 6 wherein said leach is carried out with sulfuric acid at a concentration such that the boiling point of the sulfuric acid composition corresponds to the temperature of said leach.

8.  A process according to any one of claims 1 to 7 wherein the zirconium sulfate tetrahydrate crystals are separated at step (iii) by filtration, decanting of the diluted acid or centrifugation.

9.  A process according to any one of claims 1 to 8 wherein acid insoluble impurities in the zirconium sulfate tetrahydrate crystals produced at step (ii) are reduced by hot filtration after the dilution and before the cooling and production of said crystals.

10. A process according to any one of claims 1 to 9 wherein acid insoluble impurities are in the zirconium sulfate tetrahydrate crystals are reduced by washing.

11. A process according to any one of claims 1 to 10 wherein acid insoluble impurities in the reconstituted sulfuric acid are reduced in the sulfuric acid recycle stream by removing at least a portion of said impurities.

12. A process according to claim 11 wherein said acid insoluble impurities are reduced by "bleeding" a portion of the recycle stream.

13. A process according to claim 11 or 12 wherein said acid insoluble impurities are reduced in the sulfuric acid recycle stream by means of precipitation, ion-exchange or solvent extraction.

14. A process for the preparation of zirconium sulfate tetrahydrate comprising the steps of:
    leaching caustic-leached-dissociated zircon with sulfuric acid at a concentration of between 80% and 90% w/w sulfuric acid at a temperature which corresponds to the boiling point of the sulfuric acid;
    diluting the resulting acid leach slurry to a concentration of 65% w/w $H_2SO_4$ to produce $Zr(SO_4)_2.4H_2O$ and reducing acid insoluble impurities by hot filtration before the crystallization of zirconium sulfate tetrahydrate crystals;
    separating the zirconium sulfate tetrahydrate crystals from the diluted acid leach slurry;
    washing the zirconium sulfate tetrahydrate crystals with acetone;
    reconstituting the diluted acid by the addition of 98% w/w sulfuric acid;
    recycling the reconstituted sulfuric acid to the leach step; and
    reducing the level of acid insoluble impurities in the sulfuric acid recycle streams by means selected from the group consisting of bleeding a portion of the sulfuric acid stream, precipitating of said impurities, ion exchange, solvent extraction of said impurities and combinations thereof.

15. A process according to any one of claims 1 to 14 wherein the concentration of sulfuric acid for use in the leach at step (i), the concentration of sulfuric acid to which the acid leach slurry is diluted in step (ii) and the concentration of sulfuric acid used to reconstitute the diluted sulfuric acid at step (iv) are chosen so that the volume of reconstituted sulfuric acid recycled at step (v) is equivalent to the volume of sulfuric acid used in the leach at step (i).

**Patentansprüche**

1. Verfahren zur Herstellung von Zirconiumsulfattetrahydrat, mit den Schritten:
    (i) Auslaugen eines Zirkonmaterials mit einem niedrigen Siliciumoxidgehalt mit Schwefelsäure einer Konzentration im Bereich von 65 bis 95 % Gew./Gew., um eine saure Auslaugaufschlämmung zu erzeugen;
    (ii) Verdünnen der erhaltenen sauren Auslaugaufschlämmung, so daß die Konzentration der Schwefelsäure im Bereich von 45 bis 75 % Gew./Gew. Schwefelsäure liegt, um Zirconiumsulfattetrahydratkristalle in einer verdünnten Schwefelsäureaufschlämmung zu erzeugen;
    (iii) Abtrennen der genannten Zirconiumsulfattetrahydratkristalle aus der verdünnten Säure;
    (iv) Rekonstituieren der verdünnten Säure durch die Zugabe von Schwefelsäure einer Konzentration, die höher ist als die Konzentration der Schwefelsäure, die in Stufe (ii) zum Auslaugen verwendet wurde, um eine Schwefelsäure einer Konzentration zu erhalten, die für eine Verwendung in Stufe (i) geeignet ist; und
    (v) Zurückführen der rekonstituierten Schwefelsäure zur Auslaugstufe (i).

2. Verfahren nach Anspruch 1, bei dem die Konzentration der Schwefelsäure zur Verwendung beim Auslaugen in Stufe (i) im Bereich von 75 bis 90 % Gew./Gew. $H_2SO_4$ liegt.

3. Verfahren nach entweder Anspruch 1 oder 2, bei dem die Konzentration der Schwefelsäure zur Verwendung beim Auslaugen in Stufe (i) im Bereich von 80 bis 90 % Gew./Gew. $H_2SO_4$ liegt.

4. Verfahren nach irgendeinem der Ansprüche 1 bis 3, bei dem die Konzentration der Schwefelsäure zur Verwendung beim Auslaugen in Stufe (i) 85 % Gew./Gew. $H_2SO_4$ beträgt.

5. Verfahren nach irgendeinem der Ansprüche 1 bis 3, bei dem das genannte Zirkonmaterial mit einem niedrigen Siliciumoxidgehalt ein basisch ausgelaugter dissoziierter Zirkon ist.

6. Verfahren nach irgendeinem der Ansprüche 1 bis 5, bei dem das genannte Auslaugen bei einer Temperatur im Bereich von 175 °C bis 250 °C durchgeführt wird.

7. Verfahren nach irgendeinem der Ansprüche 1 bis 6, bei dem das genannte Auslaugen mit Schwefelsäure einer solchen Konzentration durchgeführt wird, daß der Siedepunkt der Schwefelsäurezusammensetzung der Temperatur des genannten Auslaugens entspricht.

8. Verfahren nach irgendeinem der Ansprüche 1 bis 7, bei dem die Zirconiumsulfattetrahydratkristalle in Stufe (ii) durch Filtrieren, Dekantieren der verdünnten Säure oder durch Zentrifugieren abgetrennt werden.

9. Verfahren nach irgendeinem der Ansprüche 1 bis 8, bei dem säureunlösliche Verunreinigungen in den in Stufe (ii) erzeugten Zirconiumsulfattetrahydratkristallen dadurch vermindert werden, daß man nach der Verdünnung und vor dem Abkühlen und der Herstellung der genannten Kristalle heiß filtriert.

10. Verfahren nach irgendeinem der Ansprüche 1 bis 9, bei dem säureunlösliche Verunreinigungen in den Zirconiumsulfattetrahydratkristallen durch Waschen abgereichert werden.

11. Verfahren nach irgendeinem der Ansprüche 1 bis 10, bei dem säureunlösliche Verunreinigungen in der rekonstituierten Schwefelsäure dadurch in dem Strom der zurückgeführten Schwefelsäure abgereichert werden, daß man wenigstens einen Teil dieser Verunreinigungen entfernt.

12. Verfahren nach Anspruch 11, bei dem die genannten säureunlöslichen Verunreinigungen dadurch abgereichert werden, daß man einen Teil des zurückgeführten Stroms "abzapft".

13. Verfahren nach Anspruch 11 oder 12, bei dem die genannten säureunlöslichen Verunreinigungen in dem Strom der zurückgeführten Schwefelsäure durch Fällung, Ionenaustausch oder Lösungsmittelextraktion abgereichert werden.

14. Verfahren zur Herstellung von Zirconiumsulfattetrahydrat, mit den Schritten:

Auslaugen von basisch ausgelaugtem dissoziiertem Zirkon mit Schwefelsäure einer Konzentration zwischen 80 und 90 % Gew./Gew. Schwefelsäure bei einer Temperatur, die dem Siedepunkt der Schwefelsäure entspricht;

Verdünnen der erhaltenen sauren Auslaugaufschlämmung auf eine Konzentration von 65 % Gew./Gew. Schwefelsäure, um $Zr(SO_4)_2 \cdot 4H_2O$ zu erzeugen, und Abreichern der säureunlöslichen Verunreinigungen durch Heißfiltration vor der Kristallisation der Zirconiumsulfattetrahydratkristalle;

Abtrennen der Zirconiumsulfattetrahydratkristalle aus der verdünnten sauren Auslaugaufschlämmung;

Waschen der Zirconiumsulfattetrahydratkristalle mit Aceton;

Rekonstituieren der verdünnten Säure durch Zugabe von 98 % Gew./Gew. Schwefelsäure;

Zurückführen der rekonstituierten Schwefelsäure in die Auslaugstufe; und

Vermindern des Anteils an säureunlöslichen Verunreinigungen in den Strömen der zurückgeführten Schwefelsäure durch Maßnahmen, die ausgewählt sind aus der Gruppe, die besteht aus Abzapfen eines Teil des Schwefelsäurestroms, Fällen der genannten Verunreinigungen, Ionenaustausch, Lösungmittelextraktion der genannten Verunreinigungen und Kombinationen davon.

**15.** Verfahren nach irgendeinem der Ansprüche 1 bis 14, bei dem die Konzentration der Schwefelsäure für die Verwendung beim Auslaugen in Stufe (i), die Konzentration der Schwefelsäure, auf die die saure Auslaugaufschlämmung in Stufe (ii) verdünnt wird,und die Konzentration der Schwefelsäure, die zur Rekonstituierung der verdünnten Schwefelsäure in Stufe (iv) verwendet wird, so ausgewählt werden, daß das Volumen der rekonstituierten Schwefelsäure, die in Stufe (v) zurückgeführt wird, dem Volumen der Schwefelsäure äquivalent ist, die beim Auslaugen in Stufe (i) verwendet wird.

**Revendications**

**1.** Procédé de production de sulfate de zirconium tétrahydraté, qui comprend les étapes consistant :
(i) à lixivier une matière zirconifère à faible teneur en silice avec de l'acide sulfurique ayant une concentration comprise dans la plage de 65 à 95 % en poids/poids pour produire une suspension de lixiviation à l'acide ;
(ii) à diluer la suspension de lixiviation à l'acide résultante de manière que la concentration de l'acide sulfurique se situe dans la plage de 45 % à 75 % en poids/poids d'acide sulfurique pour produire des cristaux de sulfate de zirconium tétrahydraté dans une suspension sulfurique diluée ;
(iii) à séparer les cristaux de sulfate de zirconium tétrahydraté de l'acide dilué ;
(iv) à reconstituer l'acide dilué par l'addition d'acide sulfurique à une concentration supérieure à la concentration en acide sulfurique utilisée pour la lixiviation dans l'étape (i) de manière à former de l'acide sulfurique de concentration qui convient pour l'utilisation dans l'étape (i) ; et
(v) à recycler l'acide sulfurique reconstitué dans l'étape de lixiviation (i).

**2.** Procédé suivant la revendication 1, dans lequel la concentration de l'acide sulfurique destiné à être utilisé pour la lixiviation dans l'étape (i) se situe dans la plage de 75 % à 90 % en poids/poids de $H_2SO_4$.

**3.** Procédé suivant la revendication 1 ou 2, dans lequel la concentration de l'acide sulfurique destiné à être utilisé pour la lixiviation dans l'étape (i) se situe dans la plage de 80 % à 90 % en poids/poids de $H_2SO_4$.

**4.** Procédé suivant l'une quelconque des revendications 1 à 3, dans lequel la concentration de l'acide sulfurique destiné à être utilisé pour la lixiviation dans l'étape (i) est de 85 % en poids/poids de $H_2SO_4$.

**5.** Procédé suivant l'une quelconque des revendications 1 à 4, dans lequel la matière zirconifère contenant peu de silice est du zircon dissocié et lixivié en milieu caustique.

8

**6.** Procédé suivant l'une quelconque des revendications 1 à 5, dans lequel la lixiviation est effectuée à une température comprise dans la plage de 175 à 250°C.

**7.** Procédé suivant l'une quelconque des revendications 1 à 6, dans lequel la lixiviation est conduite avec de l'acide sulfurique à une concentration choisie de manière que le poids d'ébullition de la composition d'acide sulfurique corresponde à la température de lixiviation.

**8.** Procédé suivant l'une quelconque des revendications 1 à 7, dans lequel les cristaux de sulfate de zirconium tétrahydraté sont séparés dans l'étape (iii) par filtration, décantation de l'acide dilué ou centrifugation.

**9.** Procédé suivant l'une quelconque des revendications 1 à 8, dans lequel la quantité d'impuretés insolubles dans l'acide contenues dans les cristaux de sulfate de zirconium tétrahydraté produits dans l'étape (ii) est réduite par filtration à chaud après dilution et avant refroidissement et production desdits cristaux.

**10.** Procédé suivant l'une quelconque des revendications 1 à 9, dans lequel la quantité des impuretés insolubles dans l'acide qui sont présentes dans les cristaux de sulfate de zirconium tétrahydraté est réduite par lavage.

**11.** Procédé suivant l'une quelconque des revendications 1 à 10, dans lequel la quantité des impuretés insolubles dans l'acide présentes dans l'acide sulfurique reconstitué est réduite dans le courant recyclé d'acide sulfurique par élimination d'une partie au moins de ces impuretés.

**12.** Procédé suivant la revendication 11, dans lequel la quantité d'impuretés insolubles dans l'acide est réduite par "purge" d'une portion du courant recyclé.

**13.** Procédé suivant la revendication 11 ou 12, dans lequel la quantité d'impuretés insolubles dans l'acide est réduite dans le courant recyclé d'acide sulfurique par précipitation, échange d'ions ou extraction au solvant.

**14.** Procédé de production de sulfate de zirconium tétrahydraté, comprenant les étapes qui consistent :
à lixivier du zircon dissocié-lixivié en milieu caustique avec de l'acide sulfurique à une concentration comprise entre 80 % et 90 % en poids/poids d'acide sulfurique ; à une température qui correspond au point d'ébullition de l'acide sulfurique ;
à diluer la suspension de lixiviation à l'acide résultante à une concentration de 65 % en poids/poids de $H_2SO_4$ pour produire du $Zr(SO_4)_2.4H_2O$ et à réduire la quantité d'impuretés insolubles dans l'acide par filtration à chaud avant la formation des cristaux de sulfate de zirconium tétrahydraté ;
à séparer les cristaux de sulfate de zirconium tétrahydraté de la suspension lixiviée à l'acide dilué ;
à laver à l'acétone les cristaux de sulfate de zirconium tétrahydraté ;
à reconstituer l'acide dilué par addition de 98 % en poids/poids d'acide sulfurique ;
à recycler l'acide sulfurique reconstitué dans l'étape de lixiviation ; et
à réduire la proportion d'impuretés insolubles dans l'acide présentes dans les courants recyclés d'acide sulfurique par des moyens choisis dans le groupe comprenant la purge d'une portion du courant d'acide sulfurique, la précipitation desdites impuretés, un échange d'ions, une extraction au solvant desdites impuretés, et plusieurs de ces opérations combinées.

**15.** Procédé suivant l'une quelconque des revendications 1 à 14, dans lequel on choisit la concentration de l'acide sulfurique destiné à être utilisé pour la lixiviation dans l'étape (i), la concentration de l'acide sulfurique à laquelle la suspension de lixiviation à l'acide est diluée dans l'étape (ii) et la concentration de l'acide sulfurique utilisé pour reconstituer l'acide sulfurique dilué dans l'étape (iv) de manière que le volume d'acide sulfurique reconstitué recyclé dans l'étape (v) équivaille au volume d'acide sulfurique utilisé pour la lixiviation dans l'étape (i).